# EUROPÄISCHE PATENTANMELDUNG

(11) **EP 1 103 400 A2**
(43) Veröffentlichungstag der Anmeldung: **30.05.2001**
(21) Anmeldenummer: 00123996.1
(22) Anmeldetag: 04.11.2000
(51) Int. Cl.: B60J 7/12

(54) **Verstellbares Kraftfahrzeug-Verdeck**

(30) Priorität: 26.11.1999 DE 19956875
(71) Anmelder: CTS Fahrzeug-Dachsysteme GmbH, 21079 Hamburg (DE)
(72) Erfinder: Just, Jan, Michigan 48382 (US)
(74) Vertreter: Müller, Gottfried

(57) **Zusammenfassung**

Ein verstellbares Kraftfahrzeug-Verdeck (1) weist ein Verdeckgestänge mit einer Mehrzahl gelenkig gelagerter Gestängeteile auf, die in Schließstellung des Verdecks (1) verriegelbar sind.

In einer einfachen Ausführung ist vorgesehen, dass in Schließstellung eine stirnseite eines ersten Bügels (2) des Verdeckgestänges in eine fahrzeugfeste Aufnahme einragt und dass die Stirnseite eines zweiten Bügels (3) des Verdeckgestänges die in die Aufnahme einragende stirnseite des ersten Bügels (2) übergreift und fixiert.

## Beschreibung

Die Erfindung betrifft ein verstellbares Kraftfahrzeug-Verdeck nach dem Oberbegriff des Anspruches 1.

Aus der Druckschrift DE 43 27 729 C2 ist ein verstellbares Faltdach für Kraftfahrzeuge bekannt, bestehend aus einem Verdeckgestänge und einem vom Verdeckgestänge getragenen Verdeck-bezugstoff. Das Faltverdeck ist zwischen einer Schließstellung, in der das Wageninnere überdeckt ist und das Verdeck mit dem Windschutzscheibenrahmen verbunden ist, und einer Offenstellung, in welcher das Verdeck in einem hinter dem Fahrgastraum angeordneten Stauraum abgelegt ist, verstellbar. Das Verdeckgestänge umfasst eine Mehrzahl verschwenkbar angeordneter Bügel, welche in Schließstellung eine Strecklage einnehmen und in Offenstellung übereinander liegend im Stauraum abgelegt sind.

Bei derartigen Faltverdecken und den die Verdecke bewegenden Kinematiken besteht das Problem, dass in Schließstellung das Verdeckgestänge eine ausreichend hohe Stabilität aufweisen muss, um die Stoffspannung des Bezugstoffes und den Winddruck ohne Verformung und ohne Flattergeräusche aufnehmen zu können. Für den Fall, dass auf einen fest mit dem Fahrzeug verbundenen Überrollbügel verzichtet wird, muss das Verdeck in vertikaler Richtung eine besonders hohe Stabilität aufweisen, um die Sicherheitsanforderungen für den Fall einer Überschlages erfüllen zu können. Diese hohen Anforderungen an die Sicherheit und die Stabilität des Faltverdecks erfordern aufwendige Verriegelungsmaßnahmen zur Fixierung des Verdeckgestänges in Schließstellung des Faltverdecks.

Der Erfindung liegt das Problem zu Grunde, ein gattungsgemäßes Kraftfahrzeug-Verdeck in Schließstellung mit einfachen Mitteln stabil auszuführen.

Dieses Problem wird erfindungsgemäß mit den Merkmalen des Anspruches 1 gelöst.

Gemäß der Neuerung ist vorgesehen, dass zwei Bügel des Verdeckgestänges in Schließstellung des Verdecks in der Weise zusammenwirken, dass eine gegenseitige Verriegelung und Fixierung gegeben ist. Dies wird dadurch erreicht, dass in Schließstellung die Stirnseite eines Bügels in eine fahrzeugfeste Aufnahme einragt und von der Stirnseite des zweiten Bügels übergriffen wird, so dass der erste Bügel durch den zweiten Bügel in der fahrzeugfesten Aufnahme fixiert wird und keine Bewegung mehr ausführen kann. Andererseits erfährt auch der zweite, übergreifende Bügel eine Fixierung durch den ersten Bügel, insbesondere, wenn in einer bevorzugten Ausführung die Position des ersten Bügels durch den Eingriff in die Aufnahme in zumindest einer Bewegungsrichtung festgelegt ist. Der übergreifende zweite Bügel stellt sicher, dass mit nur einem Gestängeteil die Fixierung bzw. Festlegung von zumindest zwei Gestängeteilen des Kraftfahrzeugverdecks möglich ist. Diese Ausführung zeichnet sich durch eine einfache Bauweise und durch hohe Formstabilität aus.

Zweckmäßig greift der erste Bügel in Schließstellung des Verdecks mit Formschluss in die Aufnahme in der Fahrzeugkarosserie ein. Durch diese Art der Verbindung ist sicher gestellt, dass der erste Bügel in Formschlussrichtung in etwa unbeweglich festgelegt ist. Die Formschlussrichtung schließt vorteilhaft mit der Richtung, in welcher der übergreifende zweite Bügel den ersten Bügel fixiert, einen Winkel ein, wodurch eine gegenseitige Verriegelung gewährleistet ist. Dies kann insbesondere dadurch unterstützt werden, dass am ersten Bügel eine vorspringende Nase ausgebildet ist, die in Schließstellung in eine Vertiefung in der Aufnahme formschlüssig eingreift und dass auch die beiden Bügel untereinander formschlüssig miteinander verbunden sind, insbesondere dadurch, dass der zweite Bügel eine Nut aufweist, in die ein Vorsprung am ersten Bügel, vorteilhaft die Oberseite der Nase, eingreift.

Gemäß einer weiteren, vorteilhaften Ausführung ist vorgesehen, dass der zweite, übergreifende Bügel in Schließstellung in Richtung seiner Längsachse in die Aufnahme einragt, wohingegen der erste Bügel zweckmäßig einen winklig zu einer Längsachse ausgerichteten Vorsprung aufweist, der in die fahrzeugfeste Aufnahme einragt. In dieser Ausführung schneiden sich die Längsachsen beider Bügel in Schließstellung, wodurch gewährleistet ist, dass beide Bügel in Bewegungsrichtungen quer zu ihren Längsachsen in Schließstellung fixiert sind.

Der erste Bügel ist bevorzugt ein Stoffhaltebügel, über den der Bezugsstoff des Verdecks in Schließstellung unter Spannung gesetzt wird. Der Stoffhaltebügel erstreckt sich vorteilhaft in Schließstellung zumindest mit seinem in die Aufnahme einragenden Abschnitt etwa in Richtung der Fahrzeuglängsachse, wohingegen der zweite Bügel bevorzugt etwa vertikal verläuft. Der zweite Bügel stellt zweckmäßig die B-Säule des Fahrzeugdaches dar.

Vorzugsweise ist die Aufnahme Teil eines Formstückes, welches aus einem elastischen Material gefertigt ist und zusätzlich zur Funktion, den ersten Bügel formschlüssig aufzunehmen, auch eine Dichtfunktion übernimmt, insbesondere in der Ausführung, dass der zweite Bügel mit seiner Stirnseite formschlüssig in das Formstück eingreift.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Ansicht eines Verriegelungsmechanismus zur Fixierung von zwei Bügeln eines Verdeckgestänges eines Fahrzeugverdecks, dargestellt in einer Zwischenstellung zwischen Schließ- und Offenstellung,
- Fig. 2: eine Fig. 1 entsprechende Ansicht, dargestellt jedoch in einer der Schließstellung weiter angenäherten Phase, in der einer der Bügel formschlüssig in eine Vertiefung einer fahrzeugfesten Aufnahme einragt,
- Fig. 3: der Verriegelungsmechanismus in Schließstellung, in der ein zweiter Bügel die Stirnseite des ersten Bügels formschlüssig übergreift und fixiert.

In den folgenden Figuren sind gleiche Bauteile mit gleichen Bezugszeichen versehen.

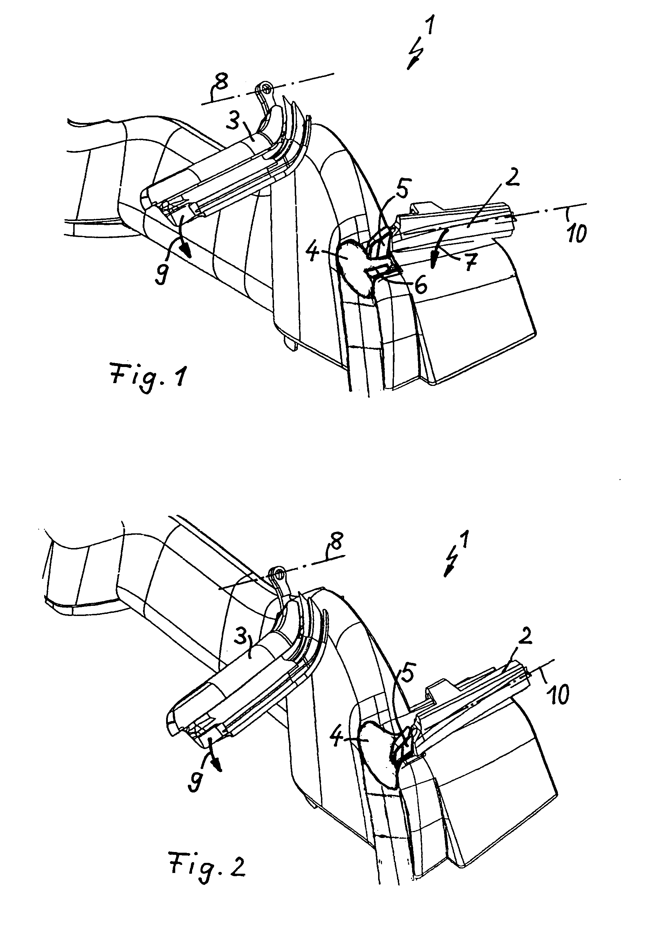

Das in Fig. 1 bis 3 ausschnittsweise dargestellte Verdeck 1 eines Kraftfahrzeugs umfasst eine Mehrzahl von Gestänge-Bauteilen, die beweglich miteinander verbunden sind und zwischen Schließstellung und Offenstellung verschwenkt werden können. Der in den Fig. 1 bis 3 dargestellte Ausschnitt des Verdecks zeigt eine Verriegelungskinematik bzw. einen Verriegelungsmechanismus, welcher durch ein besonderes Zusammenwirken von zwei Gestänge-Bauteilen des Verdecks realisiert ist. Gemäß dem neuartigen Verriegelungsmechanismus ist vorgesehen, dass ein erster Bügel 2 und ein zweiter Bügel 3 mit einer Aufnahme in einem fahrzeugfesten Formstück 4 zusammenwirken.

In der in Fig. 1 gezeigten Zwischenstellung zwischen Offenstellung und Schließstellung des Verdecks ist der erste Bügel 2, welcher insbesondere ein den Verdeck-Bezugstoff in Schließstellung spannender Stoffhaltebügel ist, mit einer stirnseitigen Nase 5, die im Bereich der freien Stirnseite des ersten Bügels 2 angeordnet ist, einer als Vertiefung 6 ausgebildeten Aufnahme im Formstück 4 angenähert, wobei die Vertiefung 6 zur insbesondere formschlüssigen Aufnahme der Nase 5 am ersten Bügel 2 ausgebildet ist. Der schwenkbar gelagerte Stoffhaltebügel 2 kann mit seiner Nase 5 beim Übergang gemäß Pfeilrichtung 7 von Offenstellung in Schließstellung in die Vertiefung 6 im Formstück 4 einrasten, wodurch in einer Ebene quer zu der durch Pfeilrichtung 7 definierten Einrastrichtung ein formschlüssiger Verbund zwischen Formstück 4 und Stoffhaltebügel 2 gegeben ist.

Das Formstück 4 besteht aus einem elastischen, gummiartigen Material, wobei auf Grund der Nachgiebigkeit des Formstücks 4 ein Toleranzausgleich bei der Einführbewegung der Nase 5 in die Vertiefung 6 sicher gestellt ist. Darüber hinaus weist das Formstück 4 zweckmäßig Dichtungseigenschaften auf, um in Schließstellung des Verdecks einen wind- und wasserdichten Abschluss der im Formstück 4 aufgenommenen Bauteile zu gewährleisten.

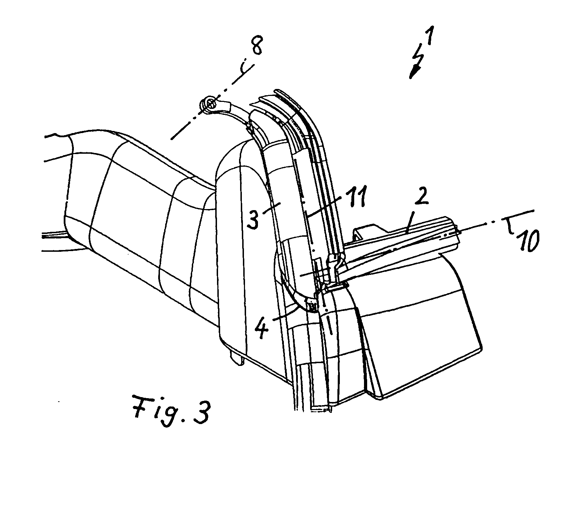

Der zweite Bügel 3, der insbesondere die B-Säule im Fahrzeugdach darstellt, ist um eine räumliche Drehachse 8 schwenkbar am Verdeckgestänge gelagert. Die B-Säule 3 ist aus der in Fig. 1 gezeigten Zwischenstellung in Pfeilrichtung 9 in eine Position zu verschwenken, in der die der Drehachse 8 gegenüberliegende Stirnseite der B-Säule 3 in das Formstück 4 eingreift, siehe Fig. 3. Zweckmäßig ist die freie Stirnseite der B-Säule 3 an die Kontur des Formstücks 4 angepasst, um den wind- und wasserfesten Abschluss zu unterstützen. Die freie Stirnseite der B-Säule 3 ist mit einer Nut versehen, die die vorspringende Nase 5 am Stoffhaltebügel 2 in Schließstellung des Mechanismus aufnimmt.

In Fig. 2 ist das Verdeck 1 in einer weiteren, der Schließstellung angenäherten Phase dargestellt, in der die Nase 5 am Stoffhaltebügel 2 bereits in die Vertiefung im fahrzeugfesten Formstück 4 formschlüssig eingreift. Die Nase 4 weist einen Vorsprung auf, der quer zur Längsachse 10 des endseitigen Abschnittes des Stoffhaltebügels nach unten vorspringt, um ein Eingreifen in die Vertiefung im Formstück 4 zu ermöglichen. Die B-Säule 3 wird in der in Fig. 2 gezeigten Zwischenstellung weiterhin in Pfeilrichtung 9 verschwenkt, wobei die freie Stirnseite der B-Säule 3 dem Formstück 4 angenähert wird.

In der in Fig. 3 gezeigten Schließstellung übergreift die freie Stirnseite der B-Säule 3 die an der Stirnseite des Stoffhaltebügels 2 befestigte Nase, so dass eine Bewegung des Stoffhaltebügels 2 aus der Aufnahme 4 heraus blockiert ist. Die Längsachsen 10 und 11 des Stoffhaltebügels 2 bzw. der B-Säule 3 schneiden sich und schließen insbesondere einen Winkel von etwa 90° ein, wobei in der gezeigten Schließstellung die Längsachse 10 des stirnseitigen Abschnittes des Stoffhaltebügels 2 etwa in Richtung der Fahrzeuglängsachse verläuft und die Längsachse 11 der B-Säule annähernd vertikal verläuft. Der Winkeleinschluss zwischen den Achsen 10 und 11 der Bauteile 2 bzw. 3 gewährleistet eine fixe Verriegelung sowohl des Bauteils 2 als auch des Bauteiles 3. Der Mechanismus kann ausschließlich dadurch geöffnet werden, dass zunächst die B-Säule 3 um die Drehachse 8 aufgeschwenkt wird und anschließend der Stoffhaltebügel 2 angehoben wird, so dass die Nase am Stoffhaltbügel 2 aus der Vertiefung im Formstück 4 freikommt.

Zweckmäßig ist die B-Säule 3 in Schließstellung in Richtung ihrer Verriegelungsstellung vorgespannt, um eine sichere Verriegelung beider Bauteile 2 und 3 zu gewährleisten.

## Patentansprüche

1. Verstellbares Kraftfahrzeug-Verdeck, das ein Verdeckgestänge mit einer Mehrzahl gelenkig gelagerter Gestängeteile aufweist, die in Schließstellung des Verdecks (1) verriegelbar sind,
**dadurch gekennzeichnet,**
dass in Schließstellung eine Stirnseite eines ersten Bügels (2) des Verdeckgestänges in eine fahrzeugfeste Aufnahme einragt und dass die Stirnseite eines zweiten Bügels (3) des Verdeckgestänges die in die Aufnahme einragende Stirnseite des ersten Bügels (2) übergreift und fixiert.

2. Verdeck nach Anspruch 1,
**dadurch gekennzeichnet,**
dass die Position des ersten Bügels (2) durch die Aufnahme in zumindest einer Bewegungsrichtung fixiert ist.

3. Verdeck nach Anspruch 1 oder 2,
**dadurch gekennzeichnet,**
dass der erste Bügel (2) in Schließstellung formschlüssig in die Aufnahme eingreift.

4. Verdeck nach Anspruch 3,
**dadurch gekennzeichnet,**
dass die Aufnahme als Vertiefung (6) ausgebildet ist, in die eine Nase (5) des ersten Bügels (2) formschlüssig eingreift.

5. Verdeck nach einem der Ansprüche 1 bis 4,
**dadurch gekennzeichnet,**
dass die Aufnahme in ein Formstück (4) integriert ist und dass die Stirnseite des zweiten Bügels (3) an die Kontur des Formstücks (4) angepasst ist.

6. Verdeck nach Anspruch 5,
**dadurch gekennzeichnet,**
dass das Formstück (4) aus einem elastischen Material besteht.

7. Verdeck nach einem der Ansprüche 1 bis 6,
**dadurch gekennzeichnet,**
dass der zweite Bügel (3) in Schließstellung formschlüssig mit dem ersten Bügel (2) verbunden ist.

8. Verdeck nach Anspruch 7,
**dadurch gekennzeichnet,**
dass im Bereich der Stirnseite des zweiten Bügels (3) eine Nut zur Aufnahme eines Vorsprungs am ersten Bügel (2) ausgebildet ist.

9. Verdeck nach einem der Ansprüche 1 bis 8,
**dadurch gekennzeichnet,**
dass die Längsachsen (10, 11) des ersten und des zweiten Bügels (2, 3) sich in Schließstellung schneiden.

10. Verdeck nach einem der Ansprüche 1 bis 9,
**dadurch gekennzeichnet,**
dass die Längsachse (10) des ersten Bügels (2) in Schließstellung näherungsweise in Fahrzeuglängsrichtung zeigt.

11. Verdeck nach einem der Ansprüche 1 bis 10,
**dadurch gekennzeichnet,**
dass die Längsachse (11) des zweiten Bügels (3) in Schließstellung näherungsweise vertikal verläuft.

12. Verdeck nach einem der Ansprüche 1 bis 11,
**dadurch gekennzeichnet,**
dass der erste Bügel (2) schwenkbar gelagert ist.

13. Verdeck nach einem der Ansprüche 1 bis 12,
**dadurch gekennzeichnet,**
dass der zweite Bügel (3) schwenkbar gelagert ist.

14. Verdeck nach einem der Ansprüche 1 bis 13,
**dadurch gekennzeichnet,**
dass der zweite (3), den ersten Bügel (2) übergreifende Bügel in Schließstellung in Richtung seiner Längsachse (10, 11) in die Aufnahme einragt.

15. Verdeck nach einem der Ansprüche 1 bis 14,
**dadurch gekennzeichnet,**
dass der erste Bügel (2) ein Stoffhaltebügel ist, über den in Schließstellung ein Bezugstoff des Verdecks unter Spannung zu setzen ist.

16. Verdeck nach einem der Ansprüche 1 bis 15,
**dadurch gekennzeichnet,**
dass der zweite Bügel (3) die B-Säule des Fahrzeugdaches ist.
